Europäisches Patentamt

European Patent Office

Office européen des brevets

(11) Publication number: 0 325 838
A2

# EUROPEAN PATENT APPLICATION

(21) Application number: 88310368.1

(22) Date of filing: 03.11.88

(51) Int. Cl.4: G11B 7/00 , G11B 25/02 , //G11B19/00

(30) Priority: 22.01.88 US 146759

(43) Date of publication of application:
02.08.89 Bulletin 89/31

(84) Designated Contracting States:
AT BE CH DE ES FR GB GR IT LI LU NL SE

(71) Applicant: ENERGY CONVERSION DEVICES, INC.
1675 West Maple Road
Troy Michigan 48084(US)

(72) Inventor: Strand, David
2091 Daintree
West Bloomfield Michigan 48033(US)

(74) Representative: Jackson, Peter Arthur et al
GILL JENNINGS & EVERY 53-64 Chancery Lane
London WC2A 1HN(GB)

(54) Optical data storage drum, drive, and method.

(57) Disclosed is a high storage density, rapid access phase change optical data storage system comprising a data storage drum (11). The optical data storage medium is on the circumferential surface (31) of the drum (11). The system further includes constant speed means (13) for rotating the data storage drum (11) about its axis of rotation and a read-write head in proximity to circumferential surface (31) of the drum (11) and adapted to both project an incident optical beam onto the surface of the phase change data storage medium and to detect and reflect an optical beam from the surface of the change optical data storage medium.

EP 0 325 838 A2

## OPTICAL DATA STORAGE DRUM, DRIVE, AND METHOD

The invention disclosed herein relates to optical data storage devices where data is stored in a phase change optical data storage material switchable between detectable states by the application of projected beam energy thereto. More particularly, the invention relates to optical data storage devices where the phase change optical data storage material is present on the circumferential surface of a drum.

Large capacity, rapid access data storage is critical to computer operations. Historically, data has been stored in the form of magnetic impulses on a magnetic disc, magnetic drum, or magnetic tape. In magnetic drum data storage devices, an electro magnetic material is deposited on the circumferential surface of a drum and the magnetization thereof is switched by a read-write head. The data is stored as a pattern of flux transitions. In magnetic drums, the read-write head is three heads in one, with the data head in the center and a tunnel erase head mounted along both sides of the tunnel data head. The purpose of the erase heads is to clear the intratrack region of flux transitions. The read-write head in electromagnetic data storage is an analog transducer that converts magnetic transitions into electrical signals. The write data is encoded and arrives as a stream of impulse functions. Using this signal as a clock to a toggle flip flop, a write transition signal is generated. Each impulse function changes the direction of magnetization and provides a flux change. Each flux transition causes the current through the read-write head to reverse. That is, the current through the read-write head changes direction with each data transition. This current reversal results in a sinusoidal like wave form having a peak to peak versus time dimension corresponding to the number of transitions. This sinusoidal like wave form is stored on the drum as tiny magnetic domains with orientation changes at each data transition.

A magnetic drum is read by a differentiator, for example, an RC network used to detect a magnetic field direction transition. Each time the differentiated signal crosses zero, a one shot portion of a recovery circuit generates a pulse. The result is a detected signal identical to the write data signal. Of particular importance in magnetic data storage is that the data transition is considered a logic event. The direction of magnetization is not the logic event.

Until fairly recently magnetic data storage media predominated. However, recently optical data storage have entered the market place. Optical data storage media offer significant data density and hence capacity advantages. Magnetic data storage typically has a memory density of about 1,000 tracks per inch and about 15,000 bits per inch. Typically, optical data storage has a data density of about 16,000 tracks per inch and about 17,000 to 25,000 bits per inch.

None ablative, phase changeable, projected energy beam data storage systems, for example, optical data storage systems, record information in a phase changeable material that is switchable between at least two detectable states by the application of projected beam energy, for example, optical or particle beam energy thereto. The concept of utilizing phase change materials, especially reversible phase change materials, as memory materials, is described in U.S. Patent 3,271,591, of S.R. Ovshinsky for Symmetrical Current Controlling Device and U.S. Patent 3,530,441 of S.R. Ovshinsky for Method And Apparatus Retrieving Information, both of which are incorporated herein by reference. Memory devices using thin film phase change materials are described in U.S. Patent 3,696,344 to Julius Feinleib for Optical Mass Memory Employing Amorphous Thin Films, U.S. Patent 3,626,386 to Julius Feinleib for Information Storage Systems, and U.S. Patent 3,665,425 to Julius Feinleib for Information Storage System Utilizing Amorphous Thin Films, all of which are incorporated herein be reference. U.S. Patent 3,737,877 to Julius Feinleib for Data Storage System With Coarse And Fine Directing Means, incorporated herein by reference, describes a drive for a disc incorporating an optical data storage material

State changeable memory materials have detectable states which may differ in their morphology, surface topography, relative degree of atomic order, relative degree of atomic disorder, nature of the order or disorder, bond orbital interaction and overlap, electrical properties, and or optical properties. Moreover, the changes in properties may be detectable, for example, by electrical conductivity or electrical resistivity measurements, optical transmissivity, optical absorption, or reflectivity measurements, index of refraction measurements or combinations thereof, thereby evidencing changes in local short range atomic order and bond orbital interaction and overlap.

The phase changeable optical data storage material is present in an optical data storage device having an optically and thermally interactive structure such that the optical data storage material is thermally and optically capable of being rapidly switched from one detectable state to another detectable state by the application of the projected beam energy thereto. The various layers of materials making up the optically and thermally interactive structure include inter alia, sealing layers, antiablation materials and layers, thermal insulation layers and materials, antireflective layers and materials, and reflective layers and materials. Moreover, various layers may perform more then one these functions. The thicknesses of the individual layers, including the layer of state changeable data storage material are optimized for a particular application whereby to minimize the energy necessary for state change while retaining a high carrier to noise ratio, and high storage stability of the state changeable storage material. One particularly desirable thermally and optically interactive layered data storage structure is described in U.S. Patent 4,660,175 to D. Strand for Data Storage Device Having Novel Barrier Layers Encapsulating The Data Storage Medium, incorporated herein by reference. The fabrication of these devices is described in U.S. Patent 4,621,032 to J.P. deNeufville and D. Strand for Method Of Forming A Data Storage Medium And Data Storage Device By Congruent Sublimation, and U.S. Patent 4,676,646 to D. Strand and J. Vala for Method And Apparatus for Controlling Thickness of a Layer of An Optical Data Storage Device By Measuring an Optical Property of the Layer, both of which are incorporated herein by reference.

Tellurium based materials have been utilized as phase changeable memory materials. The use of chalcogenides for data storage is described, for example, in J. Feinleib, J. deNeufville, S.C. Moss, and S.R. Ovshinsky, "Rapid Reversible Light-Induced Crystallization of Amorphous Semiconducts", Appl. Phys. Lett., Vol. 18(6), pages 254-257 (Mar. 15, 1971), in J. Feinleib, S. Isawa, S.C. Moss, J.P. deNeufville, and S.R. Ovshinsky, "Reversible Optical Effects in Amorphous Semiconducts", J. Non-Crystalline Solids, Vol. 8-10, pages 909-916 (1972), and in U.S. Pat. No. 3,530,442 to S.R. Ovshinsky for Method and Apparatus For Storing and Retrieving of Information. A recent description of tellurium-germanium-tin systems, without oxygen, is in M. Chen, K.A. Rubin, V. Marrello, U.G. Gerber, and V.B. Jipson, "Reversibility and Stability of Tellurium Alloys For Optical Data Storage", Appl. Phys. Lett., Vol. 46(8), pages 734-736 (April 15, 1985). Catalytic additives, which increase biasing forces to phase change and decrease biasing forces that inhibit phase change are described in U.S. Patent 3,983,542 to S.R. Ovshinsky for Method And Apparatus For Recording Information, 3,868,651 to S.R. Ovshinsky for Method And Apparatus For Storing And Reading Data In A Memory Having Catalytic Material To Initiate Amorphous To Crystalline Change In Memory Structure, and 3,988,720 to S.R. Ovshinsky for Recording And Retrieving Information In An Amorphous Memory Material Using A Catalytic Material, all of which are incorporated herein by reference. A recent description of tellurium-germanium-tin systems with oxygen is in M. Takenaga, N. Yamada, S. Ohara, K. Nishiuchi, M. Nagashima, T. Kashibara, S. Nakamura, and T. Yamashita, "New Optical Erasable Medium Using Tellurium Suboxide Thin Film", Proceedings, SPIE Conference on Optical Data Storage, Arlington, VA, 1983, pages 173-177.

Tellurium based state changeable materials have heretofore been characterized as single phase or multiphase systems (1) where the ordering phenomena include nucleation and growth processes (both homogeneous and hetrogeneous) to convert a system of disordered materials to a system of ordered and disordered materials, and (2) where the vitrification phenomenon includes melting and rapid solidification of the phase changeable material to form a system of disordered and ordered components from a system largely of ordered components. The above phase changes and separations occur over relatively small distances with intimate interlocking phases and gross structural discrimination. U.S. Patent 4,635,024 of R. Young for Data Storage Device Including A Phase Changeable Material, incorporated herein by reference, describes a failure mode of phase change materials and a method of obviating the failure mode.

Moreover, various additives may be present in the chalcogenide type materials to enhance certain properties. For example, chalcogenide compositions may be prepared containing tellurium, oxygen, and one or more transition metals, especially nickel, palladium, or platinum, whereby to act as a switching modulator, increasing the switching speed and switching sensitivity between states, for example, from the less ordered state to the more ordered state, to increase the signal to noise ratio, and to increase the randomness of orientation of crystallites of the more ordered state. The effects of the nickel, palladium or platinum may be utilized in either write once or reversible systems. One such application, thereof, is shown in U.S. patent No. 4,710,899 issued December 1, 1987 to R. Young and S. R. Ovshinsky for Data Storage Medium Incorporating a Transition Metal for Increased Switching Speed, incorporated herein by reference.

Other specific formulations of the optical data storage medium may be provided to enhance specific properties thereof. For example, the optical data storage medium may be a miscible telluride-selenide solid solution capable of being written on by direct overwrite, In direct overwrite the individual memory cells may be directly overwritten by optical heating an individual memory cell of phase changeable material and the adjacent heat sink layers with a first, high energy pulse to melt and superheat the phase change material and heat adjacent heat sink layers, and thereafter allowing the phase change material to slowly cool and crystallize. Alternatively, an individual memory cell may be heated to a lower temperature, still above the melting point thereof, with a low energy pulse to melt the phase change material and thereafter allow the phase change material to rapidly cool and vitrify. In this way, by providing either a first, high energy pulse for superheating or a second, low energy pulse which does not superheat the material, it is possible to record optically stored information by a direct overwrite system.

While various chalcogenide type phase change materials have been described above, it is to be noted that other materials, for example antimony based materials, as indium antimony and gallium antimony may be used to provide optical phase change materials.

Still other materials which may be added to the optical data storage medium include various catalysts, accelerants, and stabilizers. For example, rapidly diffusing metals such as gold, silver, and copper may be added to the phase change material to increase the switching speed in reversible systems, especially useful in, the addition of gold to tellurium oxide type systems to increase the switching speed. These catalytic additives are described, for example, in U.S. Patents 3,868,651; 3,983,542; and 3,988,720 and U.S. Application Serial No. 742,813, referred to hereinabove.

Optical data storage media have been used in combination with transparent drums. In operation, the light is transmitted through the drum, for example, from an internal light source to an external sensor, this provides the output data stream.

Exemplary of these systems are U.S. Patent 3,408,634 to Lee for an Optical Memory System, U.S. Patent 3,175,194 to Golay for An Optical Memory System, U.S. Patent 3, 509,543 to Lee, et al for an Optical Memory System, U.S. Patent 3,654,624 to Becker, et al for Laser Recording System Using Drum Mounted Record Strips. All of these systems are characterized in that they are either write-once systems or read only systems, where the data is preprogrammed onto a glass or transparent ceramic substrate one time and subsequently used as a ROM (Read Only Memory).

U.S. Patent 3,636,529 to Borner, et al for a Drum Storage System With Alternating Light Beams describes the use of a color changeable dye deposited on a transparent drum. The dye is switchable by incident radiation and readable by optical transmission. As disclosed in Borner, et al, the dye is on a rotating transparent drum. Reflecting means, such as a double cone mirror, are present inside the drum. Galvanometer driven mirrors, which operate at a high frequency, assist the reading and writing functions. Writing may be accomplished by exposing the color changeable dye to light of a certain wavelength, which wavelength is tailored to alter the light transmissibility of the dye. The light is reflected from a light source onto the drum by a Galvanometer driven mirror. Reading is accomplished by the transmission of light through transparent portions (i.e. those portions not discolored by the light sensitive substance) of the glass drum, and onto the conic reflector which reflects the light incident thereupon outward to a light sensor.

None of the prior art utilizes a phase change optical data storage media, with its high storage density, on the circumference of a drum.

According to the invention described herein there is provided a compact, high storage density, rapid access phase change optical data storage system. The system comprises a data storage drum having a central axis of rotation and a circumferential surface. A layer of phase change optical data storage medium is present on the circumferential surface. The data storage medium is adapted to store data, for example. In one configuration the drum circumferential surface has intersecting tracks and sectors, with the tracks being perpendicular to the axis of rotation and the sectors being parallel to the axis of rotation. The system further includes constant speed means for rotating the data storage drum about the axis of rotation, and a read-write head. The read-write head is in proximity to the circumferential surface of the data storage drum and adapted to both project an incident optical beam onto the surface of the phase change data storage medium and to detect a reflected optical beam from the surface of the phase change optical data storage medium. The read-write head includes means for movably positioning the incident optical beam in a direction parallel to the axis of rotation of the drum.

The data storage medium comprises a data storage material that is capable of having optically detectable discrete portions thereof structurally switched from a first optically detectable atomic structure condition to a second optically detectable atomic structure condition by the application of optical energy to the discrete regions. The first and second optically detectable atomic structure conditions may differ from each other in short range order, including bond orbital overlap and interaction. For example, one of said first and second optically detectable common structure conditions may be crystalline and the other may be amorphous. The states may differ in index of refraction, reflectivity, conductivity, or the like. In a particularly preferred exemplification, the data storage material is reversibly switchable between the first and second optically detectable atomic structure conditions. While the method and apparatus are described with respect to reversible systems, it is to be understood that the method and apparatus claimed and described herein is also useful in a write-once system.

The optical data storage medium may be a chalcogenide or other material capable of exhibiting detectable, e.g., optically detectable, changes in short range order upon the application of energy thereto, for example optical energy. In a particularly preferred exemplification the storage medium is a chalcogen, for example, tellurium. The data storage medium may further comprise a cross linking agent, a catalyst, or both. One particularly desirable group of catalysts are transition metals, nickel, palladium and platinum which may be present in a chalcogenide type data storage medium either with or without oxygen. One particularly desirable optical data storage medium is one having the composition

$(Te_xO_{1-x})_{100-a} (Te_yM_{1-y})_a$

where M is an accelerant or catalyst, e.g., a crystallization accelerant or catalyst, x and y are independently variable from about 0.25 to 0.75, and a is from about 0.10 to 0.95, with x, y, and a being optimized with respect to crystallization speed, contrast ratio, and carrier to noise ratio, inter alia.

M, the accelerant, may be a transition metal. The preferred transition metals for the accelerant are the transition of Group VIII, i.e., Fe, Co, Ni, Ru, Rh, Pd, Os, Ir, Pt and mixtures thereof, with Ni, Pd, and Pt especially preferred as phase change accelerants and initiators. One class of especially preferred phase change materials are those of the type:

$(Te_xO_{1-x})_{100-a} (Te_yM_{1-y})_a$

where M is chosen from the group consisting of Ni, Pd, Pt, and mixtures thereof, x is from about 0.45 to about 0.80, y is from about 0.25 to about 0.75, and a is from about 10 to 50. Within this class, tellurium-palladium-oxygen alloys of the composition range

$(Te_xO_{1-x})_{100-a} (Te_yPd_{1-y})_a$

where x is from about 0.45 to 0.80, y is from 0.25 to 0.75, and especially from 0.33 to 0.50 and a is from about 10 to 50 and especially from 15 to 25, are particularly preferred. Alloys within this composition range have a very high switching speed, and therefore require less time to crystallize.

Alternative data storage medium are antimonides and other materials adapted for direct overwrites, for example, antimonides having the composition $Sb_{40}Te_{46}Se_{14}$ and $Sb_{70}In30$. Other materials adaptable for direct overwrite include miscible telluride-selenide compositions.

The optical data storage system is characterized in that it is possible to obtain data densities of less then 1.6 square microns per bit and less then 12.8 square microns per byte.

The optical data storage system described herein comprises means for moving either the entire read and write head or the incident beam thereof with respect to data storage medium. For example, the read-write head, equivalently known as an optical head, may include mechanical moving means, such as a linear motor means to move the optical-head relative to the optical data storage drum. Alternatively, the drive-head may comprise mirror beam director means for moving the incident beam with respect to the data storage drum, for example, rapidly moveable polygonal mirrors or galvanometric mirrors.

The invention may be understood by reference to the Figures appended hereto, in which:-

FIGURE 1 is a view, not to scale, of.a drum having optical data storage media on a circumferential surface thereof.

FIGURE 2 shows an optical data storage drum having tracks and sectors on the circumference thereof, with the drive logic.

FIGURE 3 is a data bus address bus diagram of the microprocessor drum control drum drive system.

FIGURE 4 is general schematic view, not to scale, an alternative exemplification where a scanning mirror is utilized to direct the incident beam to the drum surface and detect the reflected beam.

FIGURE 5 is a further alternative exemplification where a polygonal mirror is used to direct the incident beam to the drum surface and detect the reflected beam.

According to the invention described herein there is provided a high storage density, rapid access phase change optical data storage system. The system comprises a data storage drum having a central axis of rotation and a circumferential surface. A layer of phase change optical data storage medium is deposited on the circumferential surface of the drum. The data storage medium is adapted to store data, for example, in circumferential tracks perpendicular to the axis of rotation. The system further includes constant speed means for rotating the data storage drum about the axis of rotation and past the read-write optical head. The read-write optical head is in proximity to the circumferential surface of the data storage drum and adapted to both project an incident optical beam onto the surface of the phase change data storage medium and to detect the same optical beam reflected from the surface of the phase change optical data storage medium. The read-write head includes means for movably positioning the incident optical beam in a direction parallel to the axis of rotation of the drum.

The data storage medium comprises a data storage material that is capable of having optically detectable discrete portions thereof structurally switched from a first optically detectable atomic structure state to a second optically detectable atomic structure state by the application of optical energy to the discrete regions. The first and second optically detectable atomic structure conditions differ from each other in short range order, including bond orbital interaction. For example, one of said first and second optically detectable common structure conditions may be crystalline and the other may be amorphous. In a particularly preferred exemplification, the data storage material is reversibly switchable between the first and second optically detectable atomic structure conditions. However, it is to be understood that while the method and apparatus claimed and described herein is illustrated and described with respect to reversible systems and medium, the teaching herein are equally applicable to write-once systems.

The optical data storage medium may be chalcogenide or other material capable of exhibiting changes in short range order upon the application of energy thereto. In a particularly preferred exemplification the storage medium is a chalcogen, for example, tellurium. The data storage medium may further comprise a cross linking agent, a catalyst or both. One particularly desirable group of catalysts are transition metals, nickel, palladium and platinum which may be present in a chalcogenide type data storage medium either with or without oxygen. One particularly desirable optical data storage medium is one having the composition

$(Te_xO_{1-x})_{100-a} (Te_yM_{1-y})_a$

where M is an accelerant or catalyst, e.g., a crystallization accelerant or catalyst, x and y are independently adjustable from about 0.25 to 0.75, and a is from about 0.10 to 0.95, with x, y, and a being optimized with respect to crystallization speed, contrast ratio, and carrier to noise ratio, inter alia.

M, the accelerant, may be a transition metal. The preferred transition metals for the accelerant are the transition of Group VIII, i.e., Fe, Co, Ni, Ru, Rh, Pd, Os, Ir, Pt and mixtures thereof, with Ni, Pd, and Pt especially preferred as phase change accelerants and initiators. One class of especially preferred phase change materials are those of the type.

$(Te_xO_{1-x})_{100-a}(Te_yM_{1-y})_a$

where M is chosen from the group consisting of Ni, Pd, Pt, and mixtures thereof, x is from about 0.45 to about 0.80, y is from about 0.25 to about 0.75, and a is from about 10 to 50. Within this class, tellurium-palladium-oxygen alloys of the composition range

$(Te_xO_{1-x})_{100-a} (Te_yPd_{1-y})_a$

where x is from about 0.45 to 0.80, y is from 0.25 to 0.75, and especially from 0.33 to 0.50 and a is from about 10 to 50 and especially from 15 to 25

are particularly preferred. Alloys within this composition range have a very high switching speed, and therefore require less time to crystallize.

Alternative data storage medium are antimonides and other materials adapted for direct overwrites, for example, antimonides having the composition $Sb_{40}Te_{46}Se_{14}$ and $Sb_{70}In_{30}$.

Other materials adaptable for direct overwrite include miscible telluride-selenide compositions.

The optical data storage systems contemplated herein are further characterized in that they contain data densities of smaller then 0.2 $micron^2$/bit and less then 1.2 $micron^2$/byte, uniformly sized (i.e., of a uniform size that is independent of location on the drum).

The optical data storage system described claimed herein comprises means for moving the read and write head and the incident beam with respect to data storage medium, for example, where the drive had read-write head equivalently known as a drive head, includes moving means such as linear motor means to move the optical head. Alternatively, the optical head may comprise mirror beam director means for moving the incident beam with respect to the data storage drum, for example, rapidly moveable polygonal mirrors.

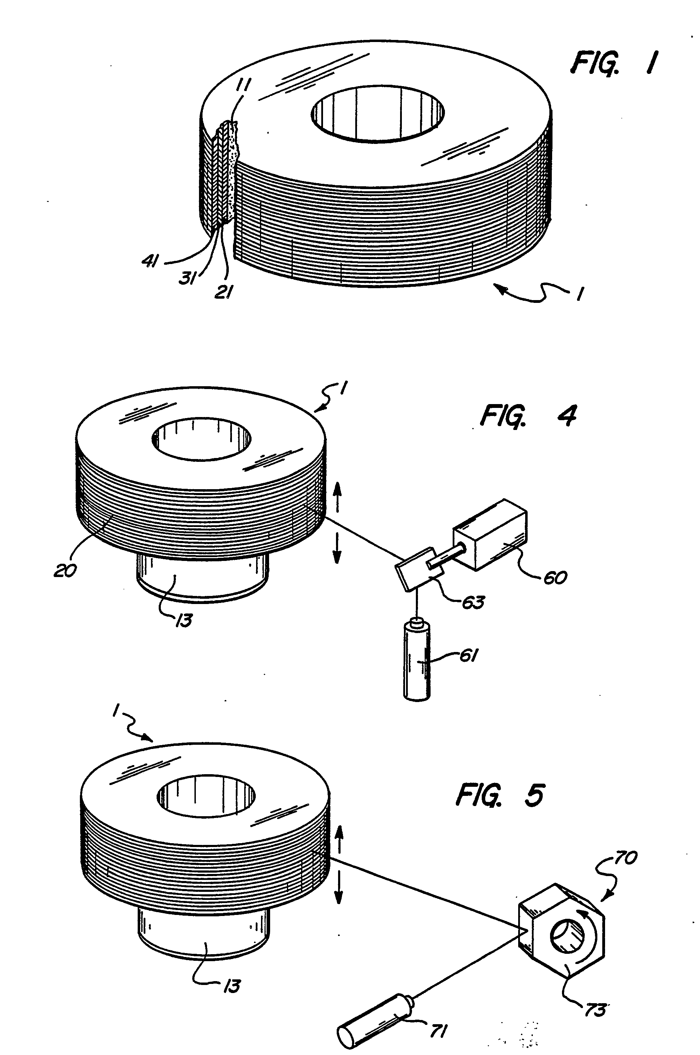

Figure 1 shows a projected beam optical data storage device 1 having a drum-like substrate 11, for example, a metallic or plastic substrate. The substrate carries an optical data storage medium 31.

The optical data storage medium 31 may be suitably encapsulated in various sealing layers and encapsulating layers, for example, a first encapsulating dielectric layer 21 such as germanium oxide dielectric layer, supporting the optical data storage medium 31, and a second dielectric layer 41, for example, a second germanium dioxide layer, encapsulating the optical data storage medium 31.

The substrate 11 is typically a drum, for example a drum having a thickness of from about a 1/4 of an inch to several inches and diameter compatible with the drive mechanism. The substrate may be formed from a polymer, for example polymethyl methacrylate, or polycarbonate or the like. Alternatively, the substrate may be formed from a metal, for example, aluminum.

There may be deposited adhesive layers and plastic layers and the like. Alternatively, or additionally there may be deposited dielectric barrier layers, insulating layers, and encapsulating layers, for example, germanium dioxide layers, silica layers, silicon nitride layers, alumina layers and the like. These layers prevent oxidizing agents from getting to the phase change layer 31 and prevent deformation of the substrate due to local heating of the phase change layer.

The optical data storage medium has a thickness from about 800 to 2000 Angstroms. The exact thickness of the data storage medium is a function of the wave length, of the laser and the indices of refraction of the two or more states of the data storage medium. ·

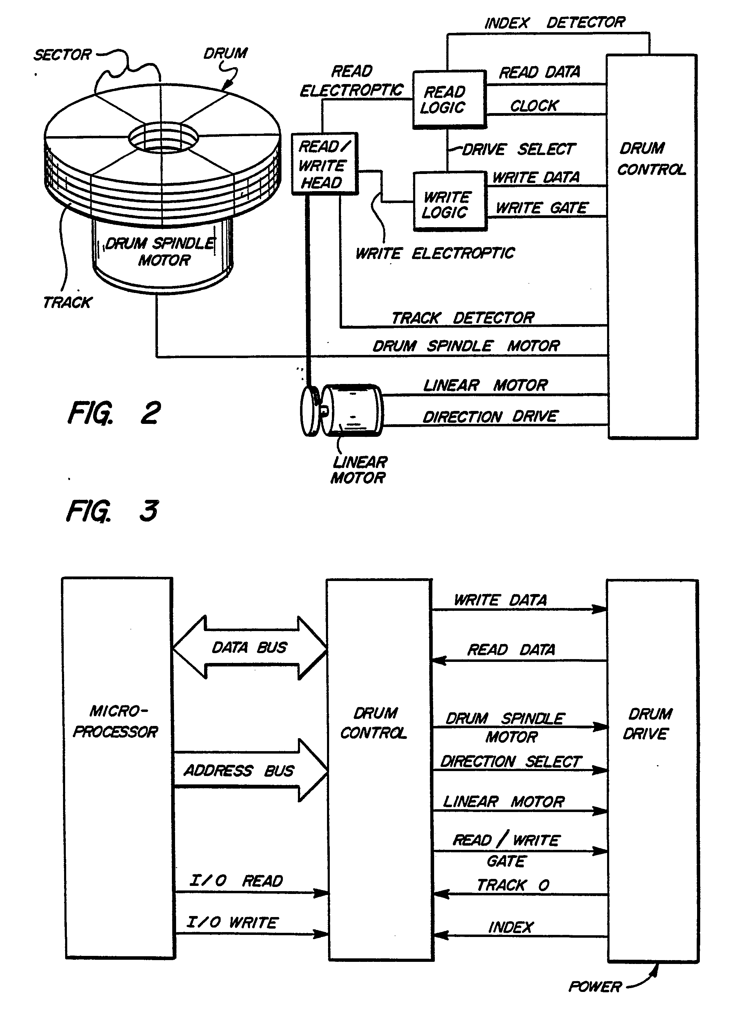

Figure 2 illustrates an optical data storage system including drive means. The circumferential active portion 20 of the drum is divided into tracks and sectors. The drum is mounted on a drum spindle motor 13. The drum spindle motor 13 is controlled by the drum control as shown in Figures 2 and 3. Exemplifications of the read-write optical head shown in the Figures are movable by a linear motor. The linear motor is driven through a linear motor control and a direction drive control from the drum control. The read-write head is controlled by read logic and write logic. The read logic enablement may include an index detector, a read data actuator, a clock, and a clock pulse detector. The write logic enablement may include a write data and write gate enablement. The read logic and write logic are connected to the read and write optical head, for example with a drive select between the read logic and write logic.

Figure 3 shows the system for controlling the drum control from a microprocessor. A two bus system is shown, including a data bus and an address bus along with input-output read enable and input-output write enable, from the microprocessor to the drum control. The drum control includes a write data pathway, a read data pathway, a drum spindle motor control, a direction select control, linear motor control, read-write gate control, zero tracking, and index.

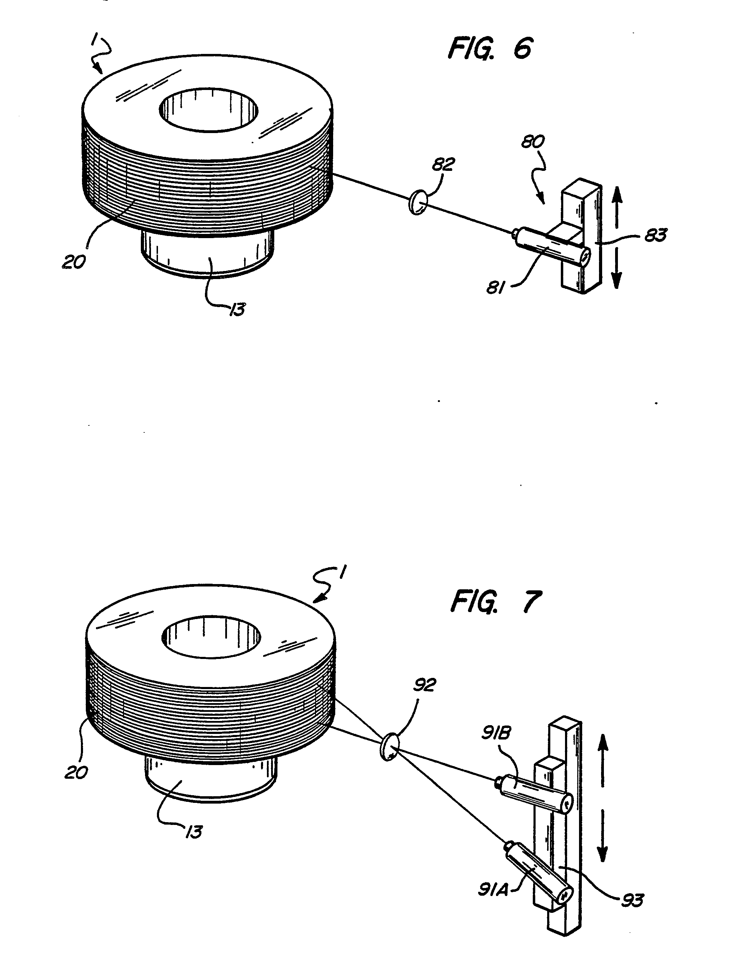

The read-write head drive, shown schematically in Figures 2 and 3 and particular aspects thereof in Figures 4 and 5, is adapted for use where the packing density is not a function of radius, i.e., where all of the tracks are parallel with the same packing density as distinguished from a disc where cells closer to the center are smaller. In this way, it is possible to obtain very high data densities with simple drive systems. For example, with a drum having a diameter of about a 100 millimeters and a height of about six millimeters (about 1/4"), it is possible to store 250 megabytes of data, with only six millimeters of drive movement similarly, a drum having a diameter of about 100 millimeters and heights of about 25 millimeters can store a gigabyte of data, again with only 25 millimeters of drive movement. By way of contrast, a 5-1/4" disc requiring a linear motor for 30 millimeters of drive movement can store only 250 megabytes. This point can not be overemphasized, a 100 millimeter radius circumferential drum having optical data storage medium on a circumferential surface thereof requires only six millimeters of drive travel, while a disc requires 30 millimeters of drive travel. The 250 megabyte drum can use a mirror drive head, as described hereinbelow, while a 250 megabyte disc cannot use a mirror drive, but must use a technique that provides linear, i.e., one dimensional, motion, as a stepper motor drive.

The drive systems illustrated in Figures 4 and 5 include various drive means other then linear motors shown in Figures 2 and 3 for focusing the incident light onto the optical data storage medium and detecting the reflected light therefrom. As shown in Figure 4, it is possible to use a galvanometric mirror system 60 where the laser beam is directed by a rapidly moving galvanometric single plane mirror.

According to still further exemplification shown in Figure 5, it is possible to utilize a polygonal mirror system 70. A polygonal mirror system including a laser 71, and a polygonal mirror 73 is shown in Figure 5. The polygonal mirror 73 rotates at a very high speed, with a particular polygon position being utilized in combination with timing circuitry to direct the beam to a specified memory cell.

According to a still further exemplification, shown in Figure 6, it is possible to utilize a movable optical head system 80. A movable head system including at least one laser 81, a lend 86, and linear motor means 83 is shown in Figure 6. The motor 83 moves the laser 81 parallel to the axis of rotation of the drum 20.

According to a still further embodiment of this exemplification, it is possible to use a multiple laser optical head. A system with a multiple laser optical head 90 is shown in Figure 7. The multiple optical head 90 includes at least two lasers 91A and 91B. The lasers 91A and 91B are shown one above the other, with a single lens 92 and a single linear motor means 93. However, the individual lasers 91A and 91B may have individual motor means and individual optics. One advantage of multiple lasers is the reduced maximum travel of an individual laser, which results in operational advantages.

While the drawings show the drums having a vertical axis of rotation, and the optical drives moving vertically, it is to be understood that a horizontal axis of rotation, with the optical drives moving horizontally is within the scope of my inventor.

While the invention has been described with respect to certain preferred exemplifications and embodiments thereof, it is not intended to limit the scope of the invention thereby but solely by the claims appended hereto.

## Claims

1. A high storage density, rapid access phase change optical data storage system comprising a rotating data storage means (1) and means (69, 71) for entering data onto and reading data from said data storage means (1); characteristics in that:
said data storage means comprises a data storage drum (11) having a central axis of rotation and a circumferential surface, with a layer (31) of thin film, phase change data storage medium on the circumferential surface; said data storage medium (31) adapted to store data in circumferential tracks thereon, said tracks being perpendicular to the axis of rotation;
means (13) for rotating the data storage drum (11) about the axis of rotation thereof; and
a read-write head (read-write head, Figure 2), in proximity to the circumferential surface of the data storage drum (11) and adapted to both project an incident optical beam onto the surface of the phase change data storage medium (31) and detect a reflected optical beam from the surface of the phase change optical data storage medium, said read-write head including means (60, 70) for movably positioning said incident optical beam in a direction parallel to the axis of rotation of the drum.

2. The data storage system of Claim 1, wherein said phase change data storage medium comprises a data storage material capable of having optically detectable discrete portions thereof structurally altered from a first optically detectable atomic structure condition to a second optically detectable atomic structure condition by the application of optical energy to the discrete regions.

3. The data storage system of Claim 2, wherein said first and second optically detectable atomic structure conditions differ from each other in short range order.

4. The data storage system of Claim 3, wherein one of said first and second optically detectable atomic structure conditions is substantially crystalline and the other is substantially amorphous.

5. The data storage system of Claim 2, wherein said data storage material is reversibly switchable between said first and second optically detectable atomic structure conditions.

6. The data storage system of Claim 2, wherein the data storage material is chosen from the group consisting of chalcogenides and antimonides.

7. The data storage system of Claim 6, wherein the data storage material comprises Te.

The data storage system of Claim 7, wherein the data storage material comprises a cross linking agent.

9. The data storage system of Claim 7, wherein the data storage material comprises a catalyst.

10. The data storage system of Claim 9, wherein the catalyst is chosen from the group consisting of Ni,Pd,Pt and combinations thereof.

11. The data storage system of Claim 2, wherein the data storage material is adapted for direct overwrite.

12. The storage system of Claim 11, wherein the data storage material has the nominal composition $Sb_{70}In_{30}$.

13. The data storage system of Claim 11, wherein the data storage material has the nominal composition $Te_{46}Sb_{40}Se_{14}$.

14. The data storage system of Claim 1, wherein said data storage system has a data density of less then 1.6 square micron per bit.

15. The data storage system of Claim 1, wherein said data storage system has a data density of less then 12.8 square micron per byte.

16. The data storage system of Claim 1, wherein said data storage system comprises means for moving the read-write optical head and the incident beam with respect to the data storage drum.

17. The data storage system of Claim 16, wherein said optical head moving means comprises linear motor means.

18. The data storage system of Claim 1, wherein said drive head comprises mirror beam director means for moving the incident beam with respect to the data storage drum.

19. The data storage system of Claim 18, wherein the mirror beam director means comprises a movable polygonal mirror.

20. The data storage system of Claim 18, wherein the mirror beam director means comprises a galvanometric scanner.

FIG. 1

41
31
21
1

FIG. 4

1
20
13
60
63
61

FIG. 5

1
13
70
71
73

INDEX DETECTOR

SECTOR

DRUM

READ ELECTROPTIC

READ DATA

READ LOGIC

CLOCK

DRIVE SELECT

DRUM CONTROL

READ/ WRITE HEAD

WRITE DATA

WRITE LOGIC

WRITE GATE

DRUM SPINDLE MOTOR

WRITE ELECTROPTIC

TRACK

TRACK DETECTOR

DRUM SPINDLE MOTOR

LINEAR MOTOR

*FIG. 2*

DIRECTION DRIVE

LINEAR MOTOR

*FIG. 3*

MICRO-PROCESSOR

DATA BUS

WRITE DATA

READ DATA

DRUM CONTROL

DRUM SPINDLE MOTOR

DRUM DRIVE

DIRECTION SELECT

ADDRESS BUS

LINEAR MOTOR

READ / WRITE GATE

I/O READ

TRACK 0

I/O WRITE

INDEX

POWER

FIG. 6

FIG. 7